# DEMANDE DE BREVET EUROPEEN

(11) **EP 3 945 376 A1**
(43) Date de publication de la demande: **02.02.2022**
(21) Numéro de dépôt: 21188924.1
(22) Date de dépôt: 30.07.2021
(51) Int. Cl.: G05B 13/04, G05B 15/02

(54) **SYSTÈME D'AIDE AU CONTRÔLE/COMMANDE D'ORGANES DE CONFORT ET ÉNERGÉTIQUES D'UN SYSTÈME ÉNERGÉTIQUE**

(30) Priorité: 31.07.2020 FR 2008176
(71) Demandeur: Kipsum, 92500 Reuil Malmaison (FR)
(72) Inventeur: ABOU-EID, Rami, 75018 PARIS (FR); VALLET, Bruno, 94370 SUCY EN BRIE (FR); CHEVALIER, Philippe, 92500 RUEIL MALMAISON (FR)
(74) Mandataire: Lavoix

(57) **Abrégé**

Ce système d'aide au contrôle/commande d'organes de confort et énergétiques (1) d'un système énergétique tel qu'un bâtiment, un moyen de transport ou un dispositif d'éclairage public, est caractérisé en ce qu'il comporte :
- des moyens (2) d'acquisition de données relatives à des bilans thermique et énergétique du système ;
- des moyens (3) d'élaboration d'un modèle thermique et énergétique du système à partir de ces données ;
- des moyens (4) d'acquisition de données comportementales des utilisateurs du système ;
- des moyens (5) d'élaboration d'un modèle comportemental des utilisateurs du système à partir de ces données ;
- des moyens (6) d'acquisition de données météorologiques dans l'environnement du système sur une période de temps glissante déterminée ;
- des moyens (7) de croisement de ces modèles et de ces données pour en tirer, de façon prédictive, des informations de contrôle/commande des organes de confort et énergétiques du système sur la période de temps glissante déterminée.

## Description

La présente invention concerne un système d'aide au contrôle/commande d'organes de confort et énergétiques d'un système énergétique.

Un tel système énergétique peut par exemple être un bâtiment, un moyen de transport ou encore un dispositif d'éclairage public.

D'autres systèmes peuvent bien entendu être envisagés.

Dans l'état de la ta technique, un diagnostic énergétique réalisé par exemple au niveau d'un tel bâtiment se fait par intervention humaine et sur une durée limitée.

Durant cette intervention, un ensemble de données limitées est relevé comme par exemple un relevé de compteur ou encore une mesure ponctuelle et instantanée de température ainsi qu'une collecte de l'historique énergétique du bâtiment par exemple sous la forme de factures.

Mais cette façon de procéder ne fournit qu'une vision très restreinte et imprécise sur les performances énergétiques d'un tel bâtiment.

Il existe aujourd'hui deux catégories de bâtiments, la première regroupant des bâtiments non équipés de systèmes de télésurveillance et la deuxième regroupant les bâtiments qui en sont équipés.

Les gestionnaires et les utilisateurs de la première catégorie de bâtiments sont complètement aveugles par rapport au niveau de confort et de performance énergétique du bâtiment.

Ceux de la deuxième catégorie peuvent visualiser le confort et évaluer les consommations mais n'ont aucun moyen d'utiliser les données pour évaluer des pistes d'amélioration de l'efficacité énergétique de leur bâtiment ni d'optimiser de manière automatique la consommation des équipements de celui-ci.

Les méthodes de contrôle/commande des systèmes de confort thermique actuelles sont basées sur des techniques d'asservissement en boucle fermée.

Selon ces méthodes, une mesure instantanée de la variable contrôlée est comparée à une valeur de consigne.

En fonction de l'écart entre la mesure et la valeur de consigne, un contrôleur calcule la valeur de l'action à appliquer immédiatement.

Ces méthodes s'avèrent très coûteuses en terme d'énergie pour les bâtiments et les systèmes de confort à forte inertie thermique.

En effet lorsqu'une puissance thermique est appliquée, son effet sur la variable contrôlée n'est visible qu'après une durée relativement importante.

Si le contrôleur n'arrive pas à anticiper le comportement futur du système et ne prend pas en compte les futures sollicitations qu'il subira, les risques de surconsommation énergétique ou bien d'inconfort thermique sont très élevés.

De plus, les paramètres de programmation des contrôleurs, comme les heures de confort et d'économie d'énergie, sont souvent renseignés en utilisant des profils théoriques horaires de taux de présence qui peuvent être très différents des cas d'utilisation réels.

Ceci se traduit alors par des surconsommations ou des périodes d'inconfort.

Le but de l'invention est donc de résoudre ces problèmes.

A cet effet, l'invention a pour objet un système d'aide au contrôle/commande d'organes de confort et énergétiques d'un système énergétique tel qu'un bâtiment, un moyen de transport ou un dispositif d'éclairage public, caractérisé en ce qu'il comporte :
- des moyens d'acquisition de données relatives à des bilans thermique et énergétique du système ;
- des moyens d'élaboration d'un modèle thermique et énergétique du système à partir de ces données ;
- des moyens d'acquisition de données comportementales des utilisateurs du système ;
- des moyens d'élaboration d'un modèle comportemental des utilisateurs du système à partir de ces données ;
- des moyens d'acquisition de données météorologiques dans l'environnement du système sur une période de temps glissante déterminée ;
- des moyens de croisement de ces modèles et de ces données pour en tirer, de façon prédictive, des informations de contrôle/commande des organes de confort et énergétiques du système sur la période de temps glissante déterminée.

Suivant d'autres caractéristiques du système selon l'invention prises seules ou en combinaison :
- les moyens d'acquisition de données relatives aux bilans thermique et énergétique du système comprennent des moyens d'acquisition d'informations choisies dans le groupe comprenant en outre des informations de température, d'humidité, de tension électrique, de courant consommé, de débit de fluides, de qualité de l'air, de gaz et d'environnement acoustique ;
- les moyens d'acquisition de données comportementales des utilisateurs du système comprennent des moyens d'acquisition d'informations choisies dans le groupe comprenant en outre des informations de présence/absence des utilisateurs et des informations d'actions de ceux-ci sur des éléments de confort et énergétiques du système ;
- les informations de contrôle/commande sont réactualisées régulièrement pendant la période de temps glissante déterminée ;
- il comporte des moyens d'établissement d'informations d'optimisation de confort et de consommation énergétique du système ;
- les moyens d'établissement d'informations d'optimisation comprennent des moyens d'évaluation technico-économiques de travaux de rénovation ou de remplacement d'équipements du système ;
- les moyens d'élaboration des modèles et de croisement de ceux-ci sont des moyens à apprentissage et/ou à base d'intelligence artificielle ;
- les moyens d'élaboration et/ou de croisement sont situés dans le nuage.

L'invention sera mieux comprise à la lecture de la description qui va suivre donnée uniquement à titre d'exemple et faite en se référant à :

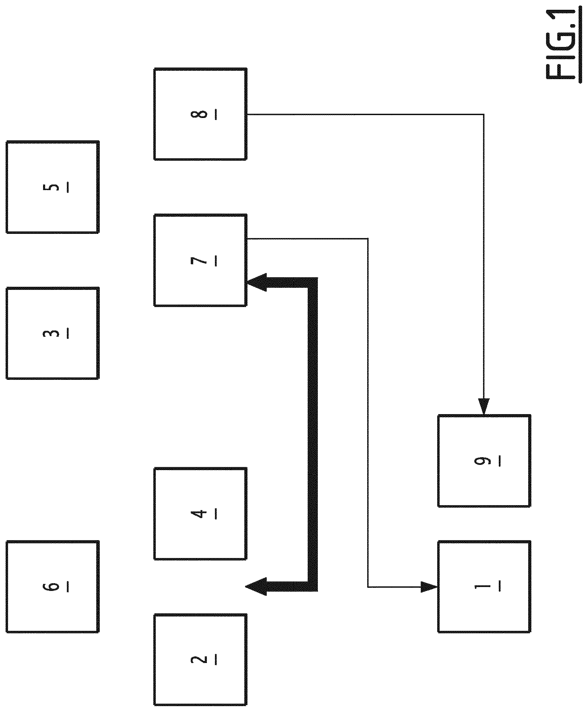

[Fig. 1] la figure 1 annexée qui représente un schéma synoptique illustrant la structure et le fonctionnement d'un système d'aide selon l'invention.

On a en effet illustré sur cette figure un système d'aide au contrôle/commande d'organes de confort d'un système énergétique tel qu'un bâtiment, un moyen de transport ou un dispositif d'éclairage public.

Dans la suite on décrira un système destiné à un bâtiment.

Sur cette figure les organes de confort et énergétiques du système, sont désignés par la référence générale 1.

Ceux-ci comprennent par exemple des moyens de chauffage/climatisation du bâtiment.

Ceux-ci sont alors pilotés comme cela a été indiqué précédemment, par un système d'aide qui comporte des moyens d'acquisition de données relatives à des bilans thermiques et énergétiques du système.

Sur cette figure ces moyens d'acquisition sont désignés par la référence générale 2.

Ces moyens comprennent par exemple des capteurs de température ou autres.

Ces moyens d'acquisition de données sont reliés à des moyens d'élaboration d'un modèle thermique et énergétique du système à partir de ces données, ces moyens d'élaboration étant désignés par la référence générale 3 sur cette figure.

Le système d'aide selon l'invention comporte également des moyens d'acquisition de données comportementales des utilisateurs du système.

Ces moyens sont désignés par la référence générale 4 sur cette figure et comprennent tout capteur permettant de déterminer le comportement des utilisateurs du système.

Ces moyens sont également reliés à des moyens d'élaboration d'un modèle comportemental des utilisateurs du système à partir de ces données, ces moyens étant désignés par la référence générale 5 sur cette figure.

Le système selon l'invention comporte également des moyens d'acquisition de données météorologiques dans l'environnement du système sur une période de temps glissante déterminée, ces moyens étant désignés par la référence générale 6 sur cette figure.

Enfin, le système selon l'invention comporte également des moyens de croisement de ces modèles et de ces données pour en tirer de façon prédictive, des informations de contrôle/commande des organes de confort et énergétiques 1 du système sur la période de temps glissante déterminée.

Ces moyens de croisement sont désignés par la référence générale 7 sur cette figure.

En fait, les moyens d'acquisition de données relatives aux bilans thermique et énergétique du système peuvent comporter des moyens d'acquisition d'informations choisies dans le groupe comprenant en outre des informations de température, d'humidité, de tension électrique, de courant consommé, de débit de fluide, de qualité de l'air, de gaz et d'environnement acoustique du système.

Les moyens d'acquisition de données comportementales des utilisateurs du système peuvent quant à eux comporter des moyens d'acquisition d'informations choisies dans le groupe comprenant en outre des informations de présence/absence des utilisateurs et des informations d'actions de ceux-ci sur des éléments de confort énergétique du système.

On notera également que les informations de contrôle/commande peuvent être réactualisées régulièrement pendant la période de temps glissante déterminée, pour ajuster au mieux le pilotage des équipements du système.

Le système selon l'invention peut également comporter des moyens d'établissement d'informations d'optimisation de confort et de consommation énergétique du système qui sont désignés par la référence générale 8 sur cette figure.

Ces moyens peuvent alors comporter des moyens d'évaluation technico-économique de travaux de rénovation ou de remplacement d'équipements du système, ces informations étant délivrées par l'intermédiaire de moyens de restitution désignés par la référence générale 9 sur cette figure.

Il est également à noter que les moyens d'élaboration des modèles et de croisement de ceux-ci peuvent par exemple être constitués par des moyens à apprentissage et/ou à base d'intelligence artificielle et que ces moyens d'élaboration et/ou de croisement peuvent être par exemple situés dans le nuage.

Le système selon l'invention est donc un gestionnaire énergétique intelligent et connecté qui récolte des données d'un système et utilise des techniques d'intelligence artificielle ou d'apprentissage pour élaborer un modèle thermique et énergétique du système ainsi qu'un modèle comportemental des utilisateurs de celui-ci.

Ce système est alors utilisé pour contrôler les équipements du système de manière prédictive en optimisant la consommation énergétique et sans compromettre le confort.

L'évaluation des caractéristiques thermo-physiques de chaque équipement permet également de fournir par exemple des recommandations de travaux ou de remplacement d'équipements du système.

## Revendications

1. Système d'aide au contrôle/commande d'organes de confort et énergétiques (1) d'un système énergétique tel qu'un bâtiment, un moyen de transport ou un dispositif d'éclairage public, **caractérisé en ce qu'**il comporte :
- des moyens (2) d'acquisition de données relatives à des bilans thermique et énergétique du système comprenant des moyens d'acquisition d'informations choisies dans le groupe comprenant en outre des informations de température, d'humidité, de tension électrique, de courant consommé, de débit de fluides, de qualité de l'air, de gaz et d'environnement acoustique ;
- des moyens (3) d'élaboration d'un modèle thermique et énergétique du système à partir de ces données ;
- des moyens (4) d'acquisition de données comportementales des utilisateurs du système ;
- des moyens (5) d'élaboration d'un modèle comportemental des utilisateurs du système à partir de ces données ;
- des moyens (6) d'acquisition de données météorologiques dans l'environnement du système sur une période de temps glissante déterminée ;
- des moyens (7) de croisement de ces modèles et de ces données pour en tirer, de façon prédictive, des informations de contrôle/commande des organes de confort et énergétiques du système sur la période de temps glissante déterminée.

2. Système d'aide au contrôle/commande d'organes de confort et énergétiques d'un système selon la revendication 1, **caractérisé en ce que** les moyens (4) d'acquisition de données comportementales des utilisateurs du système comprennent des moyens d'acquisition d'informations choisies dans le groupe comprenant en outre des informations de présence/absence des utilisateurs et des informations d'actions de ceux-ci sur des éléments de confort et énergétiques du système.

3. Système d'aide au contrôle/commande d'organes de confort et énergétiques d'un système selon l'une quelconque des revendications précédentes, **caractérisé en ce que** les informations de contrôle/commande sont réactualisées régulièrement pendant la période de temps glissante déterminée.

4. Système d'aide au contrôle/commande d'organes de confort et énergétiques d'un système selon l'une quelconque des revendications précédentes, **caractérisé en ce qu'**il comporte des moyens (8) d'établissement d'informations d'optimisation de confort et de consommation énergétique du système.

5. Système d'aide au contrôle/commande d'organes de confort et énergétiques d'un système selon la revendication 4, **caractérisé en ce que** les moyens d'établissement d'informations d'optimisation comprennent des moyens d'évaluation technico-économiques de travaux de rénovation ou de remplacement d'équipements du système.

6. Système d'aide au contrôle/commande d'organes de confort et énergétiques d'un système selon l'une quelconque des revendications précédentes, **caractérisé en ce que** les moyens (3, 5, 7) d'élaboration des modèles et de croisement de ceux-ci sont des moyens à apprentissage et/ou à base d'intelligence artificielle.

7. Système d'aide au contrôle/commande d'organes de confort et énergétiques d'un système selon l'une quelconque des revendications précédentes, **caractérisé en ce que** les moyens (3, 5, 7) d'élaboration et/ou de croisement sont situés dans le nuage.
